# EUROPÄISCHE PATENTANMELDUNG

(11) **EP 2 148 173 A2**
(43) Veröffentlichungstag der Anmeldung: **27.01.2010**
(21) Anmeldenummer: 09008793.3
(22) Anmeldetag: 04.07.2009
(51) Int. Cl.: G01C 21/34, G08G 1/0968

(54) **Verfahren zum automatischen Ermitteln einer Umleitungsroute**

(30) Priorität: 21.07.2008 DE 102008034201
(71) Anmelder: Astrium GmbH, 82024 Taufkirchen (DE)
(72) Erfinder: Trautenberg, Hans L, Dr., 85521 Ottobrunn (DE)
(74) Vertreter: Hummel, Adam

(57) **Zusammenfassung**

Die Erfindung betrifft ein Verfahren zum automatischen Ermitteln einer oder mehrer Umleitungsrouten, wobei eine fortlaufende Positionsbestimmung mittels eines Navigationssystems erfolgt und das Verfahren die folgenden Schritten aufweist:
Empfangen von Daten zu einer Behinderung in einem Gebiet (10) in der Nähe einer aktuellen Position (12; S10),
automatisches Ermitteln von einem oder mehreren Zielen (14), die über das von der Behinderung betroffene Gebiet (10) erreicht werden können (S12), automatisches Ermitteln weiterer Gebiete (16, 18, 20), über welche die ermittelten Ziele (14) erreicht werden können (S14),
Berechnen eines Bewertungsfaktors für jedes der ermittelten weiteren Gebiete (S16), und
automatisches Ermitteln einer oder mehrerer Umleitungsrouten (22, 24, 26) zur Umgehung des von der Behinderung betroffenen Gebiets (10) unter Berücksichtigung des Bewertungsfaktors (S18).

## Beschreibung

Die Erfindung betrifft ein Verfahren zum automatischen Ermitteln einer Umleitungsroute gemäß Anspruch 1.

Navigationssysteme werden im Strassen-, Luft und Wasserverkehr zur Unterstützung des Fahrzeugführers, Piloten oder Kapitäns eingesetzt. Allerdings geben nicht aktivierte Navigationssysteme, d.h. Navigationssysteme ohne programmierten Zielort, in der Regel keine Umleitungsempfehlungen aus, wenn auf einer Route problematische Gebiete auftauchen, wie beispielsweise Verkehrsstaus, Umleitungen, Schnee oder Wasser auf Strassen, starker Wellengang beim Schiffsverkehr, starker Wind im Flugverkehr und dergleichen, oder es keine Landemöglichkeit, keine Energieversorgung (Tankmöglichkeiten für Kraftstoff), keine Parkmöglichkeiten und dergleichen gibt.

Ein möglicher Zielort kann automatisch bei einem nicht aktivierten Navigationssystem beispielsweise durch statistische Auswertung von alten und im Navigationssystem gespeicherten Routen ermittelt werden. Beispielsweise ist es aus der DE 10 2006 004 616 A1 bekannt, eine Umleitungsroute bei einer gemeldeten Verkehrsstörung auch dann zu ermitteln, wenn in ein Navigationssystem kein Zielort eingegeben wurde. Dies erfolgt dadurch, dass das Navigationssystem die bisher gefahrene Fahrtroute automatisch mitkoppelt und aus dem Verlauf der bisherigen Fahrtroute eine Wahrscheinlichkeit für den weiteren Reiseweg bestimmt wird. Sofern die Wahrscheinlichkeit für den weiteren Reiseweg zutrifft, und für den weiteren Reiseweg oder in dessen näherer Umgebung eine Verkehrsstörung gemeldet wird, sucht das Navigationssystem automatisch nach einer geeigneten Umleitungsroute.

Problematisch kann die Bestimmung einer Wahrscheinlichkeit für den weiteren Reiseweg aber dann sein, wenn nicht genügend Daten über den Verlauf von bisherigen Fahrtrouten zur Verfügung stehen. Dies ist in der Regel beispielsweise unmittelbar nach Beginn der Fahrt der Fall. Ein weiteres Problem ergibt sich für Fälle, in denen keine Aufzeichnung von Daten der bisherigen Fahrtrouten gewünscht oder eine Datenaufzeichnung gar verboten ist, beispielsweise aus rechtlichen Gründen. Ein typisches Beispiel für einen derartigen Fall sind Mietwägen, bei denen viele Benutzer keine Aufzeichnung von Fahrtrouten wünschen.

Aufgabe der vorliegenden Erfindung ist es daher, ein verbessertes Verfahren zum automatischen Ermitteln einer Umleitungsroute vorzuschlagen, das insbesondere die vorstehend beschriebenen Probleme vermeidet.

Diese Aufgabe wird durch ein Verfahren zum automatischen Ermitteln einer Umleitungsroute mit den Merkmalen von Anspruch 1 gelöst. Weitere Ausgestaltungen der Erfindung sind Gegenstand der abhängigen Ansprüche.

Ein wesentlicher Gedanke der Erfindung besteht darin, dass bei einem nicht aktivierten Navigationssystem für den Fall, dass eine Behinderung bekannt ist oder wird, automatisch festgestellt wird, ob im Augenblick eine Entscheidung getroffen werden müsste, damit Ziele, die am günstigsten über das von der Behinderung betroffene Gebiet erreicht werden können, wenn keine Behinderung vorliegt, durch Benutzung von anderen Gebieten günstiger erreicht werden würden. Sofern die automatische Feststellung ergibt, dass eine Entscheidung getroffen werden müsste, da das Ziel günstiger durch Benutzung anderer Gebiet erreicht werden kann, können eine oder mehrere automatisch ermittelte Umleitungsrouten ausgegeben werden. Für die Feststellung, ob eine Entscheidung zu treffen ist oder nicht, können verschiedene Kriterien wie Zeitersparnis, Energieersparnis und/oder bessere Ökobilanz herangezogen werden.

Die Erfindung betrifft nun gemäß einer Ausführungsform ein Verfahren zum automatischen Ermitteln einer oder mehrer Umleitungsrouten, wobei eine Positionsbestimmung in geeigneten Abstand mittels eines Navigationssystems erfolgt und das Verfahren die folgenden Schritten aufweist:
Empfangen von Daten zu einer Behinderung in einem Gebiet (z. B. in der Nähe einer aktuellen Position oder einem Gebiet, welches nicht in der Nähe der aktuellen Position ist),
automatisches Ermitteln von einem oder mehreren Zielen, die über das von der Behinderung betroffene Gebiet erreicht werden können,
automatisches Ermitteln weiterer Gebiete, über welche die ermittelten Ziele erreicht werden können,
Berechnen eines Bewertungsfaktors für jedes der ermittelten weiteren Gebiete, und
automatisches Ermitteln einer oder mehrerer Umleitungsroute zur Umgehung des von der Behinderung betroffenen Gebiets unter Berücksichtigung des Bewertungsfaktors. Dieses Verfahren kann beispielsweise in Form eines Algorithmus im Betriebssystem eines Navigationssystems integriert sein und ohne explizite Eingabe eines Navigationsziels, d.h. bei nicht aktiviertem Navigationssystem, einen Benutzer im Fall von Behinderungen aktiv unterstützen. Insbesondere kann es Benutzer unterstützen, die aus verschiedenen Gründen das Navigationssystem nicht aktivieren wollen, beispielsweise bei sehr kurzen Fahrten oder dem Benutzer bekannten Fahrtrouten.

Positionsbestimmung in geeigneten Abständen ist erfindungsgemäß zum Beispiel eine fortlaufende Positionsbestimmung. Ferner ist es auch möglich, eine an die Situation angepasste Positionsbestimmung zu wählen. So ist z. B. zwischen zwei Autobahnausfahrten, wenn eine erste Autobahnausfahrt passiert wurde, für eine bestimmte Zeit keine weitere Positionsbestimmung notwendig.

Ein Bewertungsfaktor für ein Gebiet kann gemäß einer Ausführungsform der Erfindung auf Basis einer Zeitersparnis, einer Energieersparnis und/oder einer Ökobilanz für eine Route durch das Gebiet berechnet werden.

Gemäß einer Ausführungsform der Erfindung kann eine Umleitungsroute ermittelt werden, indem das ermittelten Gebiet mit dem günstigsten Bewertungsfaktor von allen ermittelten Gebieten ausgewählt und eine Route durch das ausgewählte Gebiet zum Erreichen wenigstens eines der ermittelten Ziele berechnet wird.

Die eine oder mehreren ermittelten Umleitungsrouten können gemäß einer weiteren Ausführungsform der Erfindung akustisch und/oder visuell ausgegeben werden, beispielsweise über die Anzeige und Lautsprecher des Navigationssystems oder über die visuellen, akustischen oder taktilen Ausgabesysteme von mit dem Navigationssystem verbundenen Systemen.

Ferner kann gemäß einer Ausführungsform der Erfindung der Bewertungsfaktor zu einer Umleitungsroute ausgegeben werden. Dadurch kann ein Benutzer seine Entscheidung für eine Umleitungsroute auf den Bewertungsfaktor stützen.

Weiterhin kann nach der Ausgabe von einer oder mehreren Umleitungsrouten gemäß einer weiteren Ausführungsform der Erfindung eine Auswahleingabe einer Umleitungsroute empfangen und eine Navigation entsprechend der ausgewählten Umleitungsrouten mittels des Navigationssystems akustisch und/oder visuell ausgegeben werden. Dies ermöglicht es einem Benutzer, ohne Preisgabe seines Ziels eine für ihn günstige Umleitungsroute auszuwählen.

Die Erfindung betrifft außerdem in einer Ausführungsform ein Computer-Programm zur Durchführung des Verfahrens nach der Erfindung.

Eine weitere Ausführungsform der Erfindung sieht ein Computer-Programm-Produkt vor, das einen maschinenlesbaren Programmträger umfasst, auf dem ein Computer-Programm gemäß der Erfindung in der Form von elektronisch und/oder optischen lesbaren Steuersignalen gespeichert ist. Schließlich betriff eine Ausführungsform der Erfindung eine Vorrichtung zum automatischen Ermitteln einer oder mehrer Umleitungsrouten, das zum Ausführen eines Verfahrens nach einem der Erfindung und wie vorstehend beschreiben eingerichtet ist und ein Navigationssystem aufweist, das für eine fortlaufende Positionsbestimmung ausgebildet ist.

Die Ermittlung der Umleitungsempfehlung muss nicht zwangsläufig in der Bordeinheit des Navigationssystems durchgeführt werden, sondern kann auch über zentral oder dezentral bereitgestellte Systeme erfolgen.

Die Vorrichtung kann ferner gemäß einer weiteren Ausführungsform der Erfindung ausgebildet sein, Daten zu einer Behinderung in einem Gebiet in der Nähe einer aktuellen Position per Funk und/oder von einem Empfangsgerät zu empfangen. Beispielsweise können die Daten über einen TMC (Traffic Message Channel), DAB (Digital Audio Broadcasting)- und/oder einen DSRC (Dedicated Short Range Communication)-Kanal empfangen werden.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet.

Die Zeichnungen zeigen in:
- Fig. 1: eine Navigationssituation mit einem Gebiet, in dem eine Verkehrsbe- hinderung vorliegt, und benachbarten Gebieten für Umgehungsrouten, die mittels des erfindungsgemäßen Verfahrens ermittelt werden; und
- Fig. 2: ein Flussdiagramm eines Ausführungsbeispiels des Verfahrens zum automatischen Ermitteln einer oder mehrer Umleitungsrouten gemäß der Erfindung.

Im Folgenden können gleiche und/oder funktional gleiche Elemente mit den gleichen Bezugszeichen versehen sein.

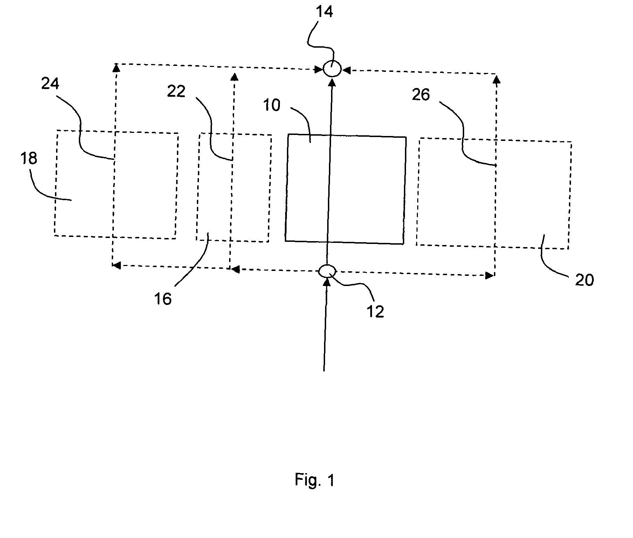

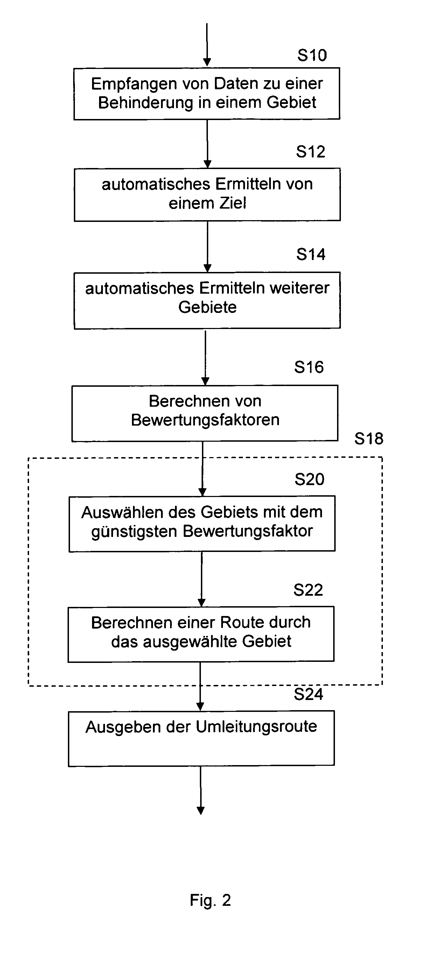

In Fig. 1 ist eine Situation dargestellt, bei dem sich in der Nähe der aktuellen Position 12 eines Fahrzeugs ein Gebiet 10 mit einer Verkehrsbehinderung, beispielsweise einem Verkehrsstau befindet. Durch einen von unten nach oben auf die Position 12 zeigenden Pfeil ist die Fahrtrichtung des Fahrzeugs angedeutet. Ein Navigationssystem, das in das Fahrzeug eingebaut ist und welches das in Fig. 2 anhand eines Flussdiagramms dargestellte erfindungsgemäße Verfahren ausführt, empfängt Daten, welche die Verkehrsbehinderung melden, per TMS, DAB oder DSRC in einem ersten Verfahrensschritt S10. Das Navigationssystem ist nicht aktiviert, indem kein Zielort eingegeben ist. Das Navigationssystem ist nicht wie in der DE 10 2006 004 616 A1 derart mitgekoppelt, dass der Verlauf der bisherigen Fahrtroute aufgezeichnet wurde. Stattdessen sind keine Daten zur bisherigen Fahrtroute im Navigationssystem gespeichert und daher für die weitere Fahrtroutenplanung verfügbar.

In einem darauf folgenden Verfahrensschritt S12 ermittelt das Navigationssystem automatisch ein Ziel 14, das über das von der Verkehrsbehinderung betroffene Gebiet günstig, d.h. mit einer sehr kurzen Fahrtstrecke erreicht werden kann. Dieses Ziel 14 kann beispielsweise anhand der aktuellen Fahrzeugposition 12 und der aktuellen Fahrtrichtung des Fahrzeugs ermittelt werden, oder anhand des Verlaufs der Strasse, auf welcher sich aktuell das Fahrzeug befindet. Das Ziel 14 kann auch mittels einer Wahrscheinlichkeitsberechnung ermittelt werden, bei der anhand verschiedener Parameter die Ziele ermittelt werden, die mit der größten Wahrscheinlichkeit vom Fahrzeug angesteuert werden. Beispielsweise kann als Ziel das Ende einer Strasse durch das Gebiet 10 ausgewählt werden, die auf dem kürzesten Weg durch das Gebiet 10 führt, oder ein Haupt-, Schnellstrasse oder gar Autobahn.

Im anschließenden Verfahrensschritt S14 ermittelt das Navigationssystem weitere Gebiete 16, 18 und 20, über die das Ziel 14 erreicht werden kann. Typischerweise sind die weiteren Gebiete 16 und 20 Nachbargebiete des von der Behinderung betroffenen Gebiets 10. Die weiteren Gebiete 16, 18 und 20 sind nicht von einer Behinderung betroffenen. Das Navigationssystem ermittelt also nur solche Gebiete als weitere Gebiete, die für eine mögliche Umgehung der Behinderung geeignet sind.

Für jedes der weiteren Gebiete 16, 18 und 20 wird nun ein Bewertungsfaktor im Verfahrensschritt S16 berechnet. Die Berechnung erfolgt nach den folgenden Kriterien: das Navigationssystem schätzt anhand seiner verfügbaren Navigationsdatenbank für jedes weitere Gebiet 16, 18 und 20 den ungefähren Zeitbedarf zum Erreichen des Ziels, den Spritverbrauch und berechnet eine Ökobilanz für jedes weitere Gebiet. Beispielsweise kann sich ergeben, dass das Ziel 14 durch das weitere Gebiet 16 am schnellsten erreicht werden kann, allerdings nur auf einer Schnellstrasse mit einer Mindestgeschwindigkeit, so dass die Ökobilanz für diese Gebiet eher schlechter ausfällt als für das weitere Gebiet 20, durch welches das Ziel 14 zwar nicht so schnell erreicht werden kann, dafür aber aufgrund von mehreren Ortsstraßen mit Geschwindigkeitsbeschränkung mit einem verhältnismäßig geringem Kraftstoffverbrauch, so dass die Ökobilanz für dieses Gebiet 20 günstig ausfällt. Der Bewertungsfaktor wird nun anhand der Zeitersparnis, der Energieersparnis und der Ökobilanz berechnet.

Nach Berechnen der Bewertungsfaktoren für jedes weitere Gebiet 16, 18 und 20 folgt ein Verfahrensschritt S18, in dem automatisch mehrere Umleitungsrouten 22, 24, 26 durch die weiteren Gebiete 16, 18 bzw. 20 zur Umgehung des von der Behinderung betroffenen Gebiets 10 unter Berücksichtigung der im Schritt S16 berechneten Bewertungsfaktoren ermittelt werden. Der Schritt S18 weist zwei Schritte S20 und S22 auf, die nacheinander ausgeführt werden.

Zunächst wird im Verfahrensschritt S20 das Gebiet mit dem günstigsten Bewertungsfaktor ausgewählt, in der in Fig. 1 dargestellten Situation beispielsweise das weitere Gebiet 20. Dann wird im Verfahrensschritt S22 eine Umleitungsroute 26 berechnet.

Der Schritt S18 kann für jedes der in Schritt S14 ermittelten Gebiete durchgeführt werden, so dass eine Liste mit mehreren Umleitungsrouten erhalten wird. Das ermöglicht einem Benutzer die Auswahl einer bevorzugten Umleitungsroute.

Schließlich gibt das Navigationssystem die im Schritt S18 ermittelte Umleitungsroute im Verfahrensschritt S24 sowohl visuell als auch akustisch aus, beispielsweise durch Anzeige der Umleitungsroute auf einem Bildschirm des Navigationssystems und Ansagen der Route über ein Lautsprechersystem.

Die Erfindung eignet sich nicht nur für den Straßenverkehr, sondern auch für den Schiffs- und Luftverkehr, insbesondere für alle Arten von Navigationssystemen, beispielsweise auch für Fußgängernavigationssysteme, sofern diese Daten zu Behinderungen in Gebiet empfangen können, beispielsweise Hinweise zu Straßensperrungen. Der Vorteil der Erfindung besteht darin, dass keine Weg- bzw. Routenaufzeichnung durchgeführt werden muss, was zum einen die Nutzung vom ersten Augenblick an erlaubt, was beispielsweise bei Miettransportgeräten oder bei Vorführungen und Tests von Bedeutung sein kann. Weiterhin ist die Erfindung insbesondere dann von Nutzen, wenn ein Benutzer nicht willens ist, einer Weg- oder Routenaufzeichnung zuzustimmen.

### Bezugszeichen

- 10: von einer Verkehrsbehinderung betroffenes Gebiet
- 12: aktuelle Fahrzeugposition
- 14: wahrscheinliches Fahrtziel
- 16, 18, 20: weitere Gebiete
- 22, 24, 26: Umleitungsrouten durch die weiteren Gebiete
- S10-S22: Verfahrensschritte

## Patentansprüche

1. Verfahren zum automatischen Ermitteln einer oder mehrerer Umleitungsrouten, wobei eine Positionsbestimmung in geeigneten Abständen mittels eines Navigationssystems erfolgt und das Verfahren die folgenden Schritten aufweist:
Empfangen von Daten zu einer Behinderung in einem Gebiet (10), automatisches Ermitteln von einem oder mehreren Zielen (14), die über das von der Behinderung betroffene Gebiet (10) erreicht werden können (S12), automatisches Ermitteln weiterer Gebiete (16, 18, 20), über welche die ermittelten Ziele (14) erreicht werden können (S14),
Berechnen eines Bewertungsfaktors für jedes der ermittelten weiteren Gebiete (S16), und
automatisches Ermitteln einer oder mehrerer Umleitungsrouten (22, 24, 26) zur Umgehung des von der Behinderung betroffenen Gebiets (10) unter Berücksichtigung des Bewertungsfaktors (S18).

2. Verfahren nach Anspruch 1, **dadurch gekennzeichnet, dass** ein Bewertungsfaktor für ein Gebiet auf Basis einer Zeitersparnis, einer Energieersparnis und/oder einer Ökobilanz für eine Route (22, 24, 26) durch das Gebiet (16, 18, 20) berechnet wird.

3. Verfahren nach Anspruch 1 oder 2, **dadurch gekennzeichnet, dass** eine Umleitungsroute (22) ermittelt wird, indem das ermittelten Gebiet (16) mit dem günstigsten Bewertungsfaktor von allen ermittelten Gebieten (16, 18, 20) ausgewählt (S20) und eine Route (22) durch das ausgewählte Gebiet (16) zum Erreichen wenigstens eines der ermittelten Ziele (14) berechnet wird (S22).

4. Verfahren nach Anspruch 1, 2 oder 3,
die eine oder mehreren ermittelten Umleitungsrouten (22, 24, 26) akustisch und/oder visuell ausgegeben werden (S24).

5. Verfahren nach Anspruch 4, **dadurch gekennzeichnet, dass** ferner der Bewertungsfaktor zu einer Umleitungsroute ausgegeben wird.

6. Verfahren nach Anspruch 4 oder 5, **dadurch gekennzeichnet, dass** nach der Ausgabe von einer oder mehreren Umleitungsrouten (22, 24, 26) eine Auswahleingabe einer Umleitungsroute empfangen wird und eine Navigation entsprechend der ausgewählten Umleitungsrouten mittels des Navigationssystems akustisch und/oder visuell ausgegeben wird.

7. Computer-Programm zur Durchführung des Verfahrens nach einem der vorhergehenden Ansprüche.

8. Computer-Programm-Produkt beinhaltend einen maschinenlesbaren Programmträger, auf dem ein Computer-Programm gemäß Anspruch 7 in der Form von elektronisch und/oder optischen lesbaren Steuersignalen gespeichert ist.

9. Vorrichtung zum automatischen Ermitteln einer oder mehrer Umleitungsrouten, das zum Ausführen eines Verfahrens nach einem der Ansprüche 1 bis 6 eingerichtet ist und ein Navigationssystem aufweist, das für eine fortlaufende Positionsbestimmung ausgebildet ist.

10. Vorrichtung nach Anspruch 9, **dadurch gekennzeichnet, dass** sie ferner ausgebildet ist, Daten zu einer Behinderung in einem Gebiet in der Nähe einer aktuellen Position per Funk und/oder von einem Empfangsgerät zu empfangen.
